(19) Europäisches Patentamt
European Patent Office
Office européen des brevets

(11) **EP 2 293 185 A1**

(12) **EUROPEAN PATENT APPLICATION**

(43) Date of publication:
**09.03.2011 Bulletin 2011/10**

(51) Int Cl.:
**G06F 7/72** *(2006.01)*

(21) Application number: **09305812.1**

(22) Date of filing: **04.09.2009**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK SM TR**<br>Designated Extension States:<br>**AL BA RS**<br><br>(71) Applicant: **Thomson Licensing**<br>**92100 Boulogne-Billancourt (FR)** | (72) Inventor: **Joye, Marc**<br>**92648, Boulogne Cedex (FR)**<br><br>(74) Representative: **Ståhl, Björn Niclas et al**<br>**Technicolor**<br>**1-5 rue Jeanne d'Arc**<br>**92130 Issy-les-Moulineaux (FR)** |

(54) **Exponentiation method resistant against skipping attacks and apparatus for performing the method**

(57) An exponentiation method resistant against skipping attacks. A main idea of the present invention is to evaluate, in parallel with the exponentiation such as $y = g^d$, a value based on the exponent, e.g. $f = d \cdot 1$. These evaluations are performed using the same exponentiation algorithm by "gluing" together the group operations underlying the computation of $y$ and $f$ so that a perturbation to one operation also perturbs the other. This makes it possible to verify that $f$ indeed equals $d$ before returning the result. Also provided are an apparatus (100) and a computer program product (140).

Figure 1

**Description**

TECHNICAL FIELD

The present invention relates generally to cryptography, and in particular to cryptographic methods resistant to so-called skipping attacks.

BACKGROUND

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Until recently, known fault attacks against RSA (Rivest-Shamir-Adleman), in standard mode, were supposed to be of a rather theoretical nature, as they require a precise fault injection, e.g. a bit flip. However, at the 5th Workshop on Fault Diagnosis and Tolerance in Cryptography (FDTC 2008), Jörn-Marc Schmidt and Christoph Herbst presented a practical fault attack against RSA using low-cost equipment; see "A Practical Fault Attack on Square and Multiply", in Luca Breveglieri, Shay Gueron, Israel Koren, David Naccache, and Jean-Pierre Seifert, editors, FDTC 2008, pages 53-58, IEEE Press, 2008.

The attack will be described hereinafter as applied to the square-and-multiply algorithm in a (multiplicatively written) algebraic group $G$, but the skilled person will appreciate that the attack is applicable also to other exponentiation algorithms. For RSA, $G$ is the multiplicative of integers modulo $N$. The square-and-multiply algorithm takes on input an element $g$ in $G$ and the binary representation of a $t$-bit exponent $d = (d_{t-1}, \cdots, d_0)_2$ with $d_i \in \{0,1\}$; the algorithm returns element $y = g^d$.

Algorithm 1: Square-and-multiply

**Require:** $g \in G, (d_{t-1}, \cdots, d_0)_2$
**Ensure:** $y = g^d$

    1. $R_0 \leftarrow 1; R_1 \leftarrow g$
    2. **for** $i = t - 1$ **downto** $0$ **do**
    3. $R_0 \leftarrow R_0{}^2$
    4. **if** $(d_i = 1)$ **then** $R_0 \leftarrow R_0 \cdot R_1$
    5. **return** $R_0$

The attack assumes that the attacker manages to skip a squaring operation. This assumption is motivated by the possibility of so-called glitch and spike attacks, as described in the Schmidt and Herbst document already mentioned hereinbefore and by Chong Hee Kim and Jean-Jacques Quisquater in "Fault Attacks for CRT-based RSA: New Attacks, New Results, and New Countermeasures"; in Damien Sauveron, Konstantinos Markantonakis, Angelos Bilas, and Jean-Jacques Quisquater, editors, Information Security Theory and Practices, volume 4462 of Lecture Notes in Computer Science, pages 215-228, Springer Verlag, 2007.

If for example the squaring at step k is skipped, then the output, denoted by $\hat{y}_k$, is given by:

$$\hat{y}_k = \prod_{i=k+1}^{t-1} g^{d_i 2^{i-1}} \cdot \prod_{i=0}^{k} g^{d_i 2^i}$$

It is then possible to retrieve the value of exponent d bit-by-bit, starting from the least significant bit, as

$$\hat{y}_k = \begin{cases} \hat{y}_{k-1} & \text{for } d_k = 0 \\ g^{2^{k-1}} \cdot \hat{y}_{k-1} & \text{for } d_k = 1 \end{cases}$$

It is straightforward to modify the described skipping attack to make it work against other exponentiation algorithms.

Adi Shamir provided an elegant countermeasure against fault attacks in "How to Check Modular Exponentiation", presented at the rump session of EUROCRYPT'97, Konstanz, Germany, May 13, 1997. The countermeasure is:

1. Compute $y' = x^d$ mod $rN$ for a (small) random integer $r$;
2. Compute $z = x^d$ mod $r$;
3. Check whether $y' \equiv z$ (mod $r$), and

- if so, output $y = y'$mod $N$;
- if not, return "error".

Typically, $r$ is a 64-bit integer. The correctness of Shamir's method is an application of the Chinese remainder theorem (CRT). When the calculations are correct, it is obvious that $y' \equiv y$ (mod $N$) and $y' \equiv z$ (mod $r$). In the presence of faults, the probability that $y' \equiv z$ (mod $r$) is about $1/r$. When r is a 64-bit value, this means that a fault is undetected with probability of roughly $2^{-64}$. Larger values for r imply a higher detection probability at the expense of more demanding computations.

Shamir's method can be adapted to protect RSA exponentiations when evaluated in CRT mode; i.e, when $y = x^d$ mod $N$ is evaluated from $x^d$ mod $p$ and $x^d$ mod $q$, where $p$ and $q$ are the secret prime factors of $N$. Further generalizations and extensions of Shamir's countermeasure are discussed in "Secure Evaluation of Modular Functions" by Marc Joye, Pascal Paillier, and Sung-Ming Yen, in R.J. Hwang and C.K. Wu, editors, 2001 International Workshop on Cryptology and Network Security, pages 227-229, Taipei, Taiwan, September 2001.

David Vigilant proposed an alternative solution in "RSA With CRT: A New Cost-Effective Solution to Thwart Fault Attacks", in E. Oswald and P. Rohatgi, editors, Cryptographic Hardware and Embedded Systems -- CHES 2008, volume 5154 of Lecture Notes in Computer Science, pages 230-145, Springer, 2008. This solution is to:

1. Form $X = CRT(x$ (mod $N$), $1 + r$ (mod $r^2$)) for a (small) random integer r;
2. Compute $y' = X^d$ mod $r^2N$;
3. Check whether $y' \equiv 1 + dr$ (mod $r^2$), and

- if so, output $y = y'$mod $N$;
- if not, return "error".

In step 1, CRT denotes an application of the Chinese remainder theorem; namely the so-obtained X satisfies $X \equiv x$ (mod $N$) and $X \equiv 1 + r$ (mod $r^2$). Hence, we have $y' \equiv x^d$ (mod $N$) and $y' \equiv (1 + r)^d$ (mod $r^2$) when the computations are not faulty. The correctness of step 3 follows from the binomial theorem. We have

$$(1+r)^d = \sum_{0 \leq k \leq d} \binom{d}{k} 1^{d-k} r^k,$$ where $\binom{d}{k}$ denotes the binomial coefficient. Reducing

this identity modulo $r^2$ gives $(1 + r)^d \equiv 1 + dr$ (mod $r^2$) and thus $y' \equiv 1 + dr$ (mod $r^2$) when the computations are not faulty. The probability that a fault is undetected is expected to be about $1/r^2$. As a result, a 32-bit value for $r$ in Vigilant's method should provide the same security level as a 64-bit value for $r$ in Shamir's method.

Vigilant's method presents a couple of advantages over Shamir's method. In particular, it trades the exponentiation $z = x^d$ mod $r$ against the multiplication $1+dr$ mod $r^2$, which is much faster, although it will be appreciated that the evaluation of z in Shamir's method can be sped up as $x^{d \bmod \varphi(r)}$ mod $r$ (where $\varphi$ denotes Euler's totient function), provided that the value of $\varphi(r)$ is known. In addition, Vigilant's method applies to RSA in CRT mode.

Although offering protection against fault attacks (and so against skipping attacks), Shamir's method and its variants when applied to RSA result in larger moduli for the computation. More generally, when applied to a group exponentiation, Shamir's method and its variants imply handling larger elements and somewhat expensive operations (see for example "Sign change fault attacks on elliptic curve cryptosystems" by Johannes Blömer, Martin Otto, and Jean-Pierre-Seifert, in L. Breveglieri et al., editors, Fault Diagnosis and Tolerance in Cryptography, volume 5154 of Lecture Notes in Computer Science, pages 36-52, Springer, 2006, for an application to elliptic curve groups). This may in turn incur important performance losses. It can therefore be appreciated that there is a need for a solution that provides an improved solution against skipping attacks. This invention provides such a solution.

SUMMARY OF INVENTION

In a first aspect, the invention is directed to an exponentiation method performed in a device. An exponentiation in group $G$ using an exponent $d$ is performed using an exponentiation algorithm with a number of iterations depending on exponent $d$. During each iteration, a second value is computed in parallel with the exponentiation. At the end of the exponentiation, it is verified that a predetermined relation $h$ exists between the second value and exponent $d$.

In a first preferred embodiment, the exponentiation involves at least a first register and the computation of the second value involves at least a second register. At each iteration, either both the first and the second registers are modified or both the first and the second registers are unchanged.

In a second preferred embodiment, the second value is obtained using the same exponentiation algorithm on a group different than group $G$ and using the exponent $d$. It is advantageous that group $G$ is the multiplicative group of integers modulo $N$ and the different group is the additive group of integers, wherein $N$ is an integer. It is alternatively advantageous that group $G$ is the group of points on an elliptic curve over a finite field and the different group is the additive group of integers. It is alternatively advantageous that group $G$ is the multiplicative group of integers modulo $N$ and the different group is the additive group of integers modulo $\Omega$, wherein $N$ and $\Omega$ are integers. It is alternatively advantageous that group $G$ is the group of points on an elliptic curve over a finite field and the different group is the additive group of integers modulo $\Omega$, wherein $\Omega$ is an integer.

In a third preferred embodiment, the relation $h$ is identity.

In a fourth preferred embodiment, the relation $h$ is congruence modulo $\Omega$, wherein $\Omega$ is an integer.

In a second aspect, the invention is directed to an apparatus for performing exponentiation. The apparatus comprises means for performing an exponentiation in group $G$ using an exponent $d$ using an exponentiation algorithm with a number of iterations depending on exponent $d$; computing during each iteration, in parallel with the exponentiation, a second value; and verifying, at the end of the exponentiation, that a predetermined relation $h$ exists between the second value and exponent $d$.

In a third aspect, the invention is directed to a computer program product having stored thereon instructions that, when executed by a processor, performs the method of any one of the embodiments of the first aspect.

## BRIEF DESCRIPTION OF DRAWINGS

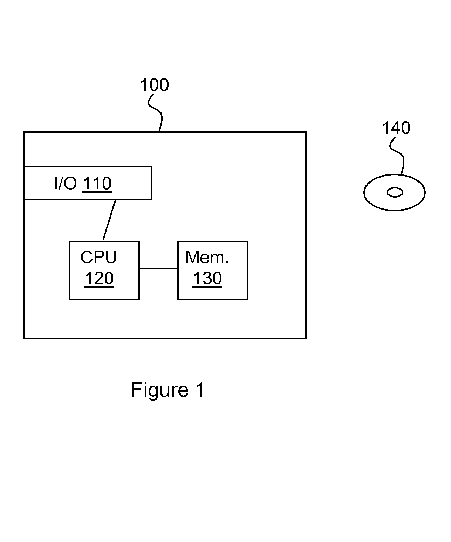

Preferred features of the present invention will now be described, by way of non-limiting example, with reference to the accompanying drawings, in which Figure 1 illustrates an apparatus for performing an exponentiation resistant against skipping attacks according to a preferred embodiment of the invention.

## DESCRIPTION OF EMBODIMENTS

For illustrative purposes, the present invention will be described as applied to the square-and-multiply algorithm, but the skilled person will appreciate that it may easily be modified to any other exponentiation algorithm.

As already mentioned, the goal of exponentiation is to evaluate $y = g^d$. A main idea of the present invention is to evaluate, in parallel with $y = g^d$, the value of $f = d \cdot 1$ or a derived value. The evaluations are performed using the same exponentiation algorithm by "gluing" together the group operations underlying the computation of $y$ and $f$. In this context, "gluing" means that the two group operations appear as an "atomic" operation, so as to ensure that a perturbation to one operation also perturbs the other. This models the fact that a perturbation will likely affect operations that a performed close in time.

The computation of $f$ may be carried out over the integers or, for better efficiency, over the integers modulo $\Omega$, where $\Omega$ typically is a 32-bit value). The computation is assumed to be error-free if $f$ is equal to $d$ (when calculated over the integers) or if $f$ is equal to $d$ modulo $\Omega$. It should be noted that the correctness may also be checked "on-the-fly", e.g. after the computation of a word of exponent $d$.

Algorithm 2: Square-and-multiply protected against skipping attacks (I)

**Require:** $g \in G$, $(d_{t-1}, \cdots, d_0)_2$

**Ensure:** $y = g^d$

```
1. R_0 ← 1; R_1 ← g
2. T_0 ← 0; T_1 ← 1
3. for i = t - 1 downto 0 do
4.   (R_0, T_0) ← (R_0^2, 2 · T_0)
5.   if (d_i = 1) then (R_0, T_0) ← (R_0 · R_1, T_0 + T_1)
6.   if (T_0 ≠ d) then return error
7. return R_0
```

In algorithm 2, $R_0$ is the temporary variable used to compute $g^d$ while $T_0$ is used to compute $f = d \cdot 1$. Algorithm 3 below shows how to evaluate $f$ over the integers modulo $\Omega$.

Algorithm 3: Square-and-multiply protected against skipping attacks (II)
**Require:** $g \in G$, $(d_{t-1}, \cdots, d_0)_2$
**Ensure:** $y = g^d$

1. $R_0 \leftarrow 1$; $R_1 \leftarrow g$
2. $T_0 \leftarrow 0$; $T_1 \leftarrow 1$
3. **for** $i = t - 1$ **downto** 0 **do**
4. $(R_0, T_0) \leftarrow (R_0^2, 2 \cdot T_0 \pmod{\Omega})$
5. **if** $(d_i = 1)$ **then** $(R_0, T_0) \leftarrow (R_0 \cdot R_1, T_0 + T_1 \pmod{\Omega})$
6. **if** $(T_0 \neq d \pmod{\Omega})$ **then return** error
7. **return** $R_0$

A variant of algorithm 3 is to compute $\overline{d} = d \bmod \Omega$ at the beginning of the algorithm and then to replace the check in step 7 by $T_0 \neq \overline{d}$, i.e. without the $(\bmod \Omega)$, in which case an error is returned.

More generally, it is also possible to pre-compute a value depending on $d$, say $\overline{d} = h(d)$, and then check whether $h(T_0) = \overline{d}$ for some function $h$ (if $h(T_0) \neq \overline{d}$ the algorithm returns an error).

It is worthwhile noting that the operations on $(R_0, T_0)$ are performed in parallel. Such a behaviour can be emulated by "gluing" together the operations. This is important as otherwise a skipping attack on $R_0$ may remain undetected. In order to "glue" the operations, an additional register $A$ is used together with two random elements $r, r' \in \{0,1\}^{|A|}$. Random elements may be chosen once for all at the beginning of the exponentiation or dynamically whenever a "glued" multiplication is evaluated. In the following algorithm, an overlined element viewed as a bitstring (e.g., $\overline{T}_0$) means the two's complement and $\oplus$ denotes the exclusive-OR operator applied to two elements viewed as bitstrings.

Algorithm 4: Example of "glued" multiplication
**Require:** $R_0, R_1, T_0, T_1, r, r'$
**Ensure:** $(R_0 \cdot R_1, T_0 + T_1)$

1. $A \leftarrow r'$
2. $T_0 \leftarrow \overline{T}_0$
3. $A \leftarrow R_0 \cdot R_1$
4. $A \leftarrow A \oplus r$
5. $T_0 \leftarrow \overline{T}_0 + T_1$
6. $R_0 \leftarrow A \oplus r$
7. **return** $(R_0, T_0)$

It is easily verified that if one of the above instructions in the "glued" multiplication is skipped this will result in a random value for $R_0$ or in an incorrect value for $T_0$. In the first case, the returned faulty value for $R_0$ will appear random and so the final output of the exponentiation algorithm will be of no use for the attacker. In the second case, the incorrect value for $T_0$ will be detected at the end of the exponentiation according to our method.

A similar algorithm is easily obtained for squaring, and also where the relevant computations are performed modulo $\Omega$. The skilled person will appreciate that there are numerous possible ways of implementing the "gluing" as long as the skipping of one or several continuous operations result in the loss of consistency.

Figure 1 illustrates a device according to a preferred embodiment of the present invention. The device 100 comprises at least one interface unit 110 adapted for communication with other devices (not shown), at least one processor 120 and at least one memory 130 adapted for storing data, such as accumulators and intermediary calculation results. The processor 120 is adapted to compute an exponentiation method that is protected against skipping attacks according to any of the embodiments of the inventive methods, as previously described herein. A computer program product 140 such as a CD-ROM or a DVD comprises stored instructions that, when executed by the processor 120, performs the method according to any of the embodiments of the invention.

It will be appreciated that the present exponentiation methods can provide protection against skipping attacks, while the introduced overhead is minimal and hardly affects the overall computation performance. In addition, the invention can be applied to any exponentiation algorithm.

Each feature disclosed in the description and (where appropriate) the claims and drawings may be provided independently or in any appropriate combination. Features described as being implemented in hardware may also be implemented in software, and vice versa. Reference numerals appearing in the claims are by way of illustration only and shall have no limiting effect on the scope of the claims.

**Claims**

1. An exponentiation method, the method being performed in a device (100) and comprising the steps of:

   - performing an exponentiation in group $G$ using an exponent $d$ using an exponentiation algorithm with a number of iterations depending on exponent $d$;
   - computing during each iteration, in parallel with the exponentiation, a second value; and
   - verifying, at the end of the exponentiation, that a predetermined relation $h$ exists between the second value and exponent $d$.

2. The method of claim 1, wherein the exponentiation involves at least a first register and the computation of the second value involves at least a second register, and wherein, at each iteration, either both the first and the second registers are modified or both the first and the second registers are unchanged.

3. The method of claim 1 or 2, wherein the second value is obtained using the same exponentiation algorithm on a group different than group $G$ and using the exponent d.

4. The method of claim 3, wherein group $G$ is the multiplicative group of integers modulo $N$ and the different group is the additive group of integers, wherein $N$ is an integer.

5. The method of claim 3, wherein group $G$ is the group of points on an elliptic curve over a finite field and the different group is the additive group of integers.

6. The method of claim 3, wherein group $G$ is the multiplicative group of integers modulo $N$ and the different group is the additive group of integers modulo $\Omega$, wherein $N$ and $\Omega$ are integers.

7. The method of claim 3, wherein group $G$ is the group of points on an elliptic curve over a finite field and the different group is the additive group of integers modulo $\Omega$, wherein $\Omega$ is an integer.

8. The method of claim 1, wherein the relation $h$ is identity.

9. The method of claim 1, wherein the relation $h$ is congruence modulo $\Omega$, wherein $\Omega$ is an integer.

10. An apparatus (100) for performing exponentiation, the apparatus being **characterised in that** it comprises means (120) for:

    - performing an exponentiation in group $G$ using an exponent $d$ using an exponentiation algorithm with a number of iterations depending on exponent $d$;
    - computing during each iteration, in parallel with the exponentiation, a second value; and
    - verifying, at the end of the exponentiation, that a predetermined relation $h$ exists between the second value and exponent $d$.

11. A computer program product (140) having stored thereon instructions that, when executed by a processor, performs the method of any one of claims 1 to 9.

100

I/O 110

CPU
120

Mem.
130

140

Figure 1

Europäisches
Patentamt

European
Patent Office

Office européen
des brevets

## EUROPEAN SEARCH REPORT

Application Number

EP 09 30 5812

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | J-M SCHMIDT ET AL: "A Practical Fault Attack on Square and Multiply" FDTC 2008, 10 August 2008 (2008-08-10), pages 53-58, XP031306594 IEEE, PISCATAWAY, NJ, USA ISBN: 978-0-7695-3314-8 * page 57, right-hand column, line 40 - line 43; figure 1 * | 1-11 | INV. G06F7/72 |
| A | CHONG HEE KIM ET AL: "Fault Attacks for CRT Based RSA: New Attacks, New Results, and New Countermeasures" WISTP 2007, LNCS 4462, 9 May 2007 (2007-05-09), pages 215-228, XP019079367 Springer Verlag, Berlin, DE ISBN: 978-3-540-72353-0 * the whole document * | 1,10-11 | |
| A | GIRAUD C ET AL: "A SURVEY ON FAULT ATTACKS" SMART CARD RESEARCH AND ADVANCED APPLICATIONS VI, 2004, pages 159-176, XP009078209 Springer Boston, Ma, USA ISSN: 1571-5736 DOI: 10.1007/1-4020-8147-2_11 ISBN: 978-1-4020-8146-0 * page 169, line 23 - line 25 * | 1,10-11 | TECHNICAL FIELDS SEARCHED (IPC) G06F |

The present search report has been drawn up for all claims

| Place of search | Date of completion of the search | Examiner |
|---|---|---|
| The Hague | 1 February 2010 | Verhoof, Paul |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

# EP 2 293 185 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **Jörn-Marc Schmidt ; Christoph Herbst.** *5th Workshop on Fault Diagnosis and Tolerance in Cryptography (FDTC 2008),* 2008
- A Practical Fault Attack on Square and Multiply. FDTC 2008. IEEE Press, 2008, 53-58
- Fault Attacks for CRT-based RSA: New Attacks, New Results, and New Countermeasures. **Chong Hee Kim ; Jean-Jacques Quisquater.** Information Security Theory and Practices, volume 4462 of Lecture Notes in Computer Science. Springer Verlag, 2007, vol. 4462, 215-228
- How to Check Modular Exponentiation. *EUROCRYPT'97,* 13 May 1997
- Secure Evaluation of Modular Functions. International Workshop on Cryptology and Network Security. September 2001, 227-229
- RSA With CRT: A New Cost-Effective Solution to Thwart Fault Attacks. Cryptographic Hardware and Embedded Systems -- CHES 2008, volume 5154 of Lecture Notes in Computer Science. Springer, 2008, vol. 5154, 230-145
- Sign change fault attacks on elliptic curve cryptosystems. **Johannes Blömer ; Martin Otto ; Jean-Pierre-Seifert et al.** Fault Diagnosis and Tolerance in Cryptography, volume 5154 of Lecture Notes in Computer Science. Springer, 2006, vol. 5154, 36-52